# EUROPEAN PATENT APPLICATION

(11) **EP 1 045 583 A2**
(43) Date of publication of application: **18.10.2000**
(21) Application number: 00303132.5
(22) Date of filing: 13.04.2000
(51) Int. Cl.: H04N 5/765

(54) **Information processing apparatus and method, and medium provided therewith**

(30) Priority: 16.04.1999 JP 10882199
(71) Applicant: SONY CORPORATION, Tokyo 141 (JP)
(72) Inventor: Sato, Masahiko, c/o Intellectual Property Dept., Tokyo 141 (JP)
(74) Representative: Horner, David Richard

(57) **Abstract**

Each of electronic apparatuses mutually connected by a plurality of buses can recognize correspondences among the buses. In other words, a television receiver (1), videocassette recorders (2, 3) are connected by an AV link (11) and an IEEE 1394 high-speed serial bus (21). The television receiver (1) uses the IEEE 1394 high-speed serial bus (21) to query the videocassette recorder (2) about its address on the AV link (11). The videocassette recorder (2) responds to the query with its own address on the AV link (11).

## Description

The present invention relates to information processing apparatuses and methods, and to media provided therewith, and in particular, to an information processing apparatus and method in which, when information processing apparatuses are connected by a plurality of buses, each of the information processing apparatuses is set to function securely, and to a medium used with the information processing apparatus and method.

Recently, a bus for connecting a plurality of electronic apparatuses has come into domestic use. In Europe, a bus of this type is an AV link defined as EN-50157 in the European Committee for Electrotechnical Standardization. The AV link is used to transmit and receive analog audiovisual (AV) signals or digital data.

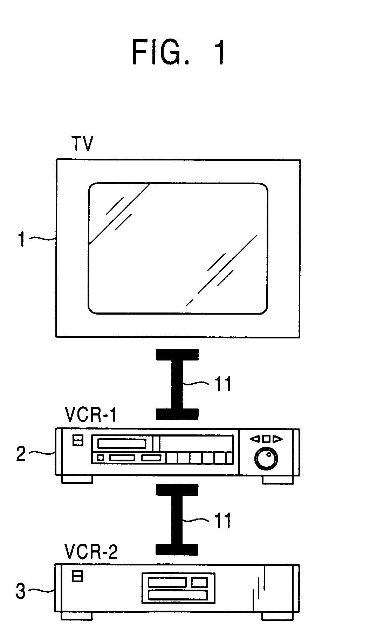

Fig. 1 shows that a plurality of electronic apparatuses are connected by AV links of the above-described type. In this example, a television receiver 1, a video cassette recorder 2, and a video cassette recorder 3 are connected by AV links 11.

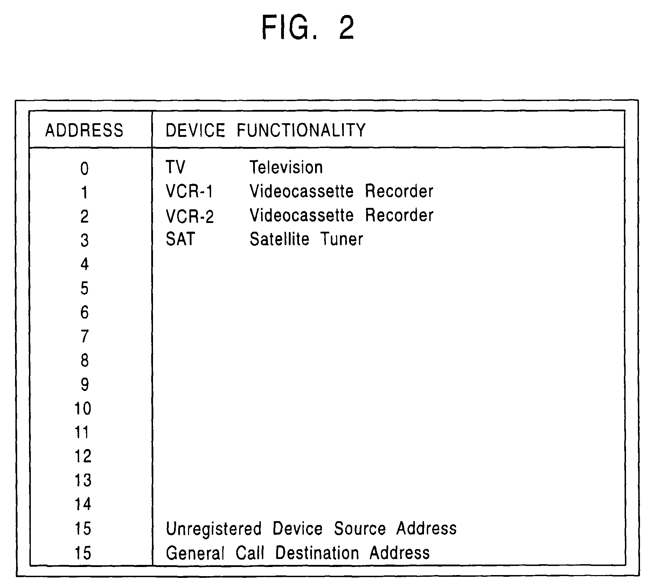

In the AV links, the positions at which electronic apparatuses are connected are predetermined. Specifically, as shown in Fig. 2, a television receiver (indicated by "TV") is treated as a highest position unit, and its address is "0". When a video cassette recorder (indicated by "VCR") and a satellite tuner (indicated by "SAT") are connected to the AV links, it is predetermined that the video cassette recorder be connected so as to be higher than the satellite tuner, in other words, so as to be closer to the television receiver. When a plurality of video cassette recorders (for example, two video cassette recorders) are connected, a (highest) video cassette recorder closest to the television receiver is called "VCR-1", and a video cassette recorder farthest from the television receiver is called "VCR-2". In other words, in the AV links, the electronic apparatuses must be connected in series (so that higher units and lower units are transparent).

Accordingly, when the video cassette recorder 2 is connected to the television receiver 1 via the AV link 11, and the video cassette recorder 3 is connected to the video cassette recorder 2 via the AV link 11, as shown in Fig. 1, the television receiver 1 is treated as "TV" having the highest address "0", the video cassette recorder 2 is treated as "VCR-1" having the second highest address "1", and the video cassette recorder 3 is treated as "VTR-2" having the lowest address 2 on the AV links 11.

The AV links 11 cannot be used to transmit and receive digital AV data. Conversely. IEEE (Institute of Electrical and Electronic Engineers) 1394 high-speed serial buses, which have come into widespread use, can be used also to transmit and receive digital AV data. However, they cannot be used to transmit and receive analog AV signals. Television receivers, which are most widely used, can receive analog AV signals transmitted via a bus and can display outputs. A small number of television receivers can receive and display supplied digital AV data.

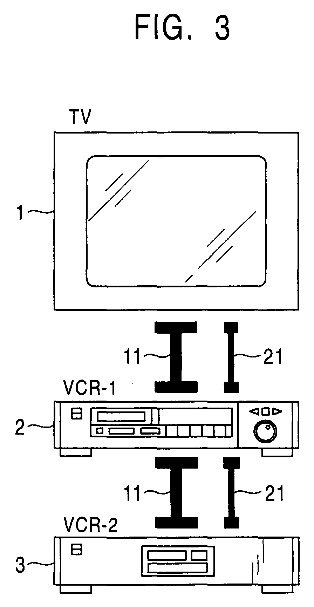

Accordingly, if a video cassette recorder can transmit and receive digital AV data, the digital AV data must be supplied as analog AV signals in order that the digital AV signals may be output and displayed on a television receiver. This also applies to video cassette recorders. Video cassette recorders include a type that can transmit and receive only analog AV signals and another type that can transmit and receive both analog AV signals and digital AV data. In this case, in order for each electronic apparatus to transmit and receive both analog and digital signals, for example, electronic apparatuses must be connected not only by AV links 11 but also by IEEE 1394 buses 21, as shown in Fig. 3.

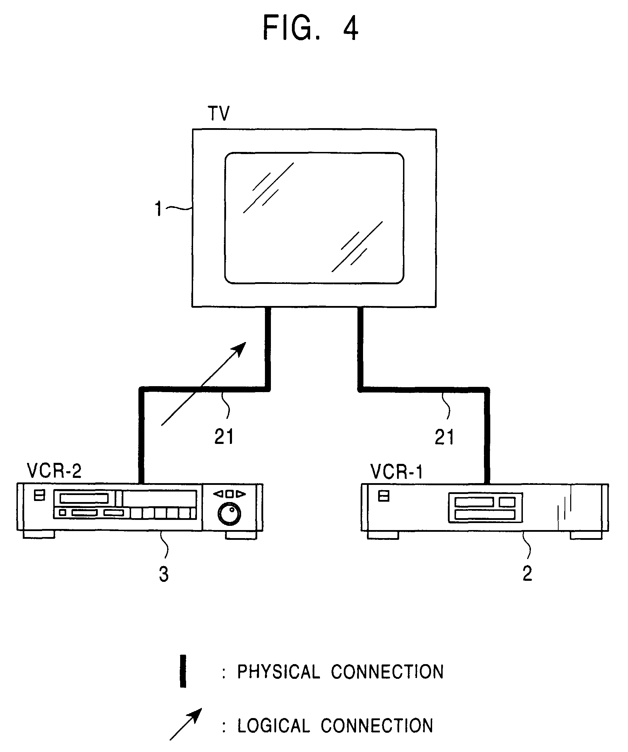

Concerning the IEEE 1394 bus, the restriction that electronic apparatuses must be connected in series, as exists concerning the AV link, does not exist. By way of example, video cassette recorders 2 and 3 can be connected in parallel to a television receiver 1, as shown in Fig. 4. When data are transmitted and received, logical connection is established between two electronic apparatuses. For example, when digital AV data read by the video cassette recorder 3 are transmitted via an IEEE 1394 bus 21 and displayed on the television receiver 1, logical connection is established between the video cassette recorder 3 and the television receiver 1.

Concerning the IEEE 1394 bus, a hierarchical relationship among electronic apparatuses, as exists concerning the AV link, does not exist. Also, in the IEEE 1394 bus, at the time of the resetting of the bus, such as switching-on of the system main power, node IDs are assigned to electronic apparatuses connected to the IEEE 1394 buses 21. Each node ID is represented by a 2-byte value. When each electronic apparatus transmits and receives data via the IEEE 1394 bus, it describes a node ID assigned to an electronic apparatus that receives the data, as a destination ID of a packet including data to be transmitted, and describes a node ID assigned to itself as a source ID representing the ID of a transmitter.

When a plurality of buses are used to connect a plurality of electronic apparatuses, as described above, it is impossible for one bus to recognize an address assigned to another bus. By way of example, in the arrangement shown in Fig. 3, it is assumed that a mixture of analog and digital AV signals is recorded in a videocassette loaded into the video cassette recorder 2. When the video cassette recorder 2 reads and outputs the analog AV signals from the loaded videocassette, the television receiver 1 receives via the AV links 11 and displays the output signals.

When the video cassette recorder 2 reads and outputs the digital AV signals, the digital signals are transferred to the television receiver 1 via the IEEE 1394 bus 21. When the television receiver 1 uses the AV link 11 to request the video cassette recorder 2 ("VCR-1" having address "1" on the AV links 11) to perform reading, and receives the digital AV signals, it can know that the video cassette recorder 2 is "VCR-1" having address "1" on the AV links 11 and the video cassette recorder 3 is "VCR-2" having address 2 on the AV links 11.

Although the television receiver 1 can know that the video cassette recorder 2 having a predetermined node ID and the video cassette recorder 3 having a predetermined node ID are connected to the television receiver 1 by the IEEE 1394 buses 21, it cannot find a node ID corresponding to "VCR-1" having address "1" on the AV links 11. Therefore, when the digital AV signals are supplied to the television receiver 1 via the IEEE 1394 buses, it is impossible for the television receiver 1 to find which node ID (as a source ID) representing a packet whose data are to be captured should be selected because the video cassette recorder 2 having the predetermined ID may output digital AV signals to the IEEE 1394 buses 21 and also the video cassette recorder 3 having the predetermined ID may transfer digital AV signals to the IEEE 1394 buses 21.

The present invention alleviates the above problem by providing an information processing apparatus and method in which the correspondence between addresses assigned to different buses is recognized, and a medium used therewith.

According to an aspect of the present invention, an information processing apparatus is provided that is connectable to another information processing apparatus by at least two buses. The information processing apparatus includes: a holding unit for holding the address of a first bus of the buses, and the address of a second bus of the buses; an inquiry unit for using the first bus to query the other information processing apparatus about the address of the second bus; and a response unit for, when the other information processing apparatus uses the first bus to query the response unit about the address of the second bus, responding to the other information processing apparatus by sending the stored address of the second bus.

Preferably, the first bus is an IEEE 1394 high-speed serial bus; and the second bus is an AV link.

According to another aspect of the present invention, an information processing method is provided for an information processing apparatus connectable to another information processing apparatus by at least two buses. The information processing method includes the steps of: holding the address of a first bus of the buses and the address of a second bus of the buses; querying the other information processing apparatus about the address of the second bus by using the first bus; and responding, when the other information processing apparatus uses the first bus to inquire about the address of the second bus, to the other information processing apparatus by sending the stored address of the second bus.

According to a further aspect of the present invention, a medium is provided for controlling an information processing apparatus to execute a program, in which the information processing apparatus is connected to another information processing apparatus by at least two buses. The program executes the steps of: holding the address of a first bus of the buses and the address of a second bus of the buses; querying the other information processing apparatus about the address of the second bus by using the first bus; and responding, when the other information processing apparatus uses the first bus to inquire about the address of the second bus, to the other information processing apparatus by sending the stored address of the second bus.

According to a still further aspect of the present invention, an information processing apparatus is provided that is connectable to another information processing apparatus by at least two buses. The information processing apparatus includes: a declaration unit for using a first bus of the buses to declare, on the other information processing apparatus, the address of a second bus of the buses; and a holding unit which, when receiving the declaration of the address of the second bus from the other information processing apparatus via the first bus, extracts the address of the first bus held in the other information processing apparatus from the declaration, and which holds the extracted address of the first bus so as to correspond to the address of the second bus held in the other information processing apparatus.

Preferably, the first bus is an AV link and the second bus is an IEEE 1394 high-speed serial bus.

According to yet another aspect of the present invention, an information processing method is provided for an information processing apparatus connectable to another information processing apparatus by at least two buses. The information processing method includes: a declaration step for using a first bus of the buses to declare, on the other information processing apparatus, the address of a second bus of the buses; and a holding step which, when receiving the declaration of the address of the second bus from the other information processing apparatus via the first bus, extracts the address of the first bus held in the other information processing apparatus from the declaration, and which holds the extracted address of the first bus so as to correspond to the address of the second bus held in the other information processing apparatus.

According to another aspect of the present invention, a medium is provided for controlling an information processing apparatus to execute a program, in which the information processing apparatus is connectable to another information processing apparatus by at least two buses. The program executes: a declaration step for using a first bus of the buses to declare, on the other information processing apparatus, the address of a second bus of the buses; and a holding step which, when receiving the declaration of the address of the second bus from the other information processing apparatus via the first bus, extracts the address of the first bus held in the other information processing apparatus from the declaration, and which holds the extracted address of the first bus so as to correspond to the address of the second bus held in the other information processing apparatus.

According to embodiments of the present invention, a first bus is used to query the address of a second bus, and an information processing apparatus that receives the inquiry responds by sending the address of the second bus held in the information processing apparatus. This correlates the address of the first bus with the address of the second bus.

According to embodiments of the present invention, a first bus is used to declare the address of a second bus, and an information processing apparatus that receives the declaration extracts the address of the first bus and holds the extracted address so as to be correlated with the address of the second bus. This can establish correspondence among the addresses of different buses.

Further particular and preferred aspects of the present invention are set out in the accompanying independent and dependent claims. Features of the dependent claims may be combined with features of the independent claims as appropriate, and in combinations other than those explicitly set out in the claims. The present invention will be described further, by way of example only, with reference to preferred embodiments thereof as illustrated in the accompanying drawings, in which:
Fig. 1 is a block diagram showing a conventional bus system;
Fig. 2 is a table illustrating AV link addresses;
Fig. 3 is a block diagram showing a bus system composed of a plurality of buses;
Fig. 4 is a block diagram showing a system using IEEE 1394 high-speed serial buses;
Fig. 5 is a block diagram showing a construction of a bus system to which an embodiment of the present invention is applied;
Fig. 6 is a flowchart illustrating a process (in the bus system shown in Fig. 5) for establishing the correspondence between each AV link address based on the IEEE 1394 standard and each node ID;
Fig. 7 is an illustration of the format of a packet on an IEEE 1394 high-speed serial bus;
Fig. 8 is an illustration of the structure of an AV/C command frame;
Fig. 9 is an illustration of the structure of an AV/C response frame;
Fig. 10 is an illustration of the format of a command for requesting an AV link address;
Fig. 11 is a flowchart illustrating a process (in the system shown in Fig. 5) by a node inquired using an IEEE 1394 bus;
Fig. 12 is an illustration of the format of a response corresponding to a command for requesting an AV link address;
Fig. 13 is a table showing the correspondence among different buses;
Fig. 14 is a flowchart illustrating a process (in the system shown in Fig. 5) for establishing the correspondence between each NUID and each node ID based on the IEEE 1394 standard;
Fig. 15 is an illustration of the format of a read-request packet;
Fig. 16 is a flowchart illustrating a process (in the system shown in Fig. 5) for performing reception for establishing the correspondence between each NUID and each node ID based on the IEEE 1394 standard;
Fig. 17 is an illustration of the format of a general ROM;
Fig. 18 is an illustration of the format of the "bus_info_block" shown in Fig. 17;
Fig. 19 is an illustration of the format of a read-response packet;
Fig. 20 is a flowchart illustrating a process (in the system shown in Fig. 5);
Fig. 21 is an illustration of a transmission packet on an AV link;
Fig. 22 is a flowchart illustrating a process (in the system shown in Fig. 5);
Fig. 23 is an illustration of the structure of packet used when a node unique ID is broadcast on an AV link;
Fig. 24 is a flowchart illustrating a process (in the system shown in Fig. 5); and
Figs. 25A, 25B, and 25C are illustrations of types of medium used in embodiments of the present invention.

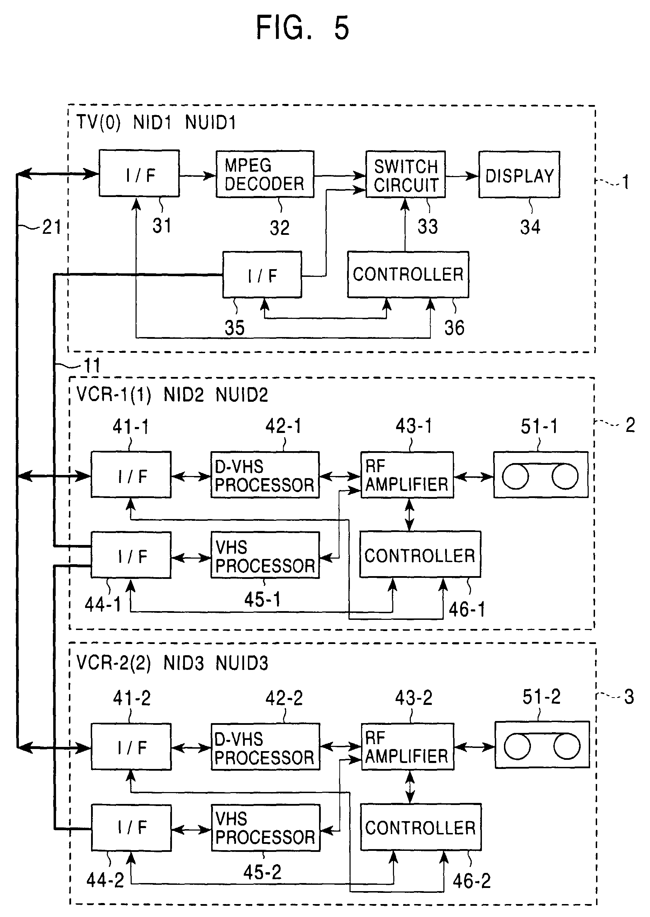

Referring to Fig. 5, a television receiver 1 and video cassette recorders 2 and 3 are connected by AV links 11 and an IEEE 1394 bus 21, similar to the example shown in Fig. 3. On the AV links 11, the television receiver 1 is "TV" having the address "0", the video cassette recorder 2 is "VCR-1" having the address "1", and the video cassette recorder 3 is "VCR-2" having the address "2". It is assumed that, when the IEEE 1394 bus is reset, the node ID "NID1" is assigned to the television receiver 1, the node ID "NID2" is assigned to the video cassette recorder 2, and the node ID "NID3" is assigned to the video cassette recorder 3. On the IEEE 1394 bus 21, a node unique ID is assigned as an unchangeable ID proper to each electronic apparatus. In Fig. 5, "NUID1", "NUID2", and "NUID3" are assigned as unique IDs to the television receiver 1, the video cassette recorder 2, and the video cassette recorder 3, respectively.

An interface (indicated by "I/F") 31 in the television receiver 1 performs interface processing on digital AV data input via the IEEE 1394 bus 21 in accordance with instructions from a controller 36, and outputs the processed data to an MPEG (moving picture expert group) decoder 32. The MPEG decoder 32 decodes the input AV data using the MPEG standard, and outputs the decoded data to a switch circuit 33. An interface 35 performs interface processing on the input analog AV signals, and outputs the processed signals to the switch circuit 33.

The controller 36 monitors the outputs from the interface 31 and the interface 35. In accordance with a result of the monitoring, the controller 36 controls the switch circuit 33, thereby selecting and outputting either the output from the MPEG decoder 32 or the output from the interface 35 to a display 34.

An interface 41-1 in the video cassette recorder 2 performs interface processing on digital AV data transmitted to and received from the IEEE 1394 bus 21. A D-VHS (trademark) processor 42-1 converts MPEG-encoded digital AV data input from the interface 41-1 into D-VHS-format data, and the converted data is supplied via an RF amplifier 43-1 and recorded in a videocassette 51-1. The D-VHS processor 42-1 also converts D-VHS-format AV data input via the RF amplifier 43-1 into MPEG-format AV data, and outputs the converted data to the interface 41-1.

An interface 44-1 performs interface processing on analog AV signals transmitted to and received from the AV link 11. A VHS (trademark) processor 45-1 converts analog AV signals input from the interface 44-1 into VHS-format AV signals, and the converted signals are supplied via the RF amplifier 43-1 and recorded in a videocassette 51-1. The VHS processor 45-1 processes VHS-format analog AV signals read from the videocassette 51-1 and input via the RF amplifier 43-1, and outputs the processed signals to the interface 44-1.

A controller 46-1 monitors outputs from the interfaces 41-1 and 44-1, and controls the RF amplifier 43-1 in accordance with a result of the monitoring. The controller 46-1 also monitors an output from the RF amplifier 43-1, and controls the interfaces 41-1 and 44-1.

The video cassette recorder 3 includes an interface 41-2 to a videocassette 51-2, and has a structure identical to that of the video cassette recorder 2. Accordingly, its description is omitted.

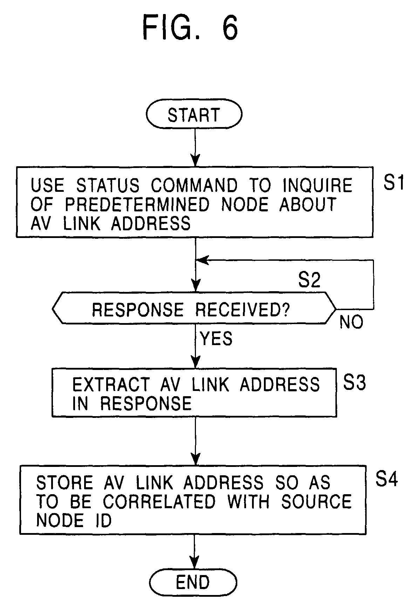

Next, a process in which the television receiver 1 uses the IEEE 1394 bus 21 to find the address of the video cassette recorder 2 or 3 (as another electronic apparatus) connected to the IEEE 1394 bus 21 is described below with reference to Fig. 6.

In step S1, the controller 36 queries a predetermined node (electronic apparatus) about an AV link address, using a status command in an AV/C command.

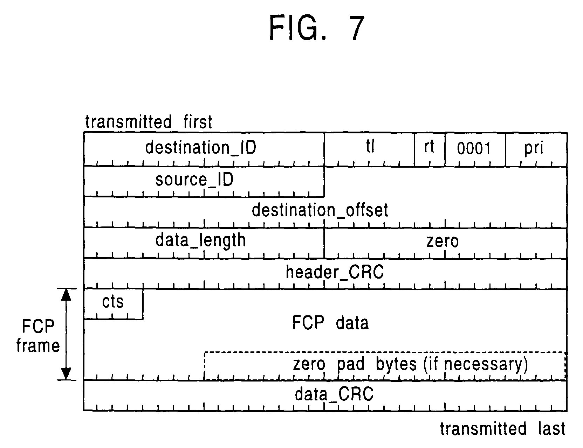

In other words, the IEEE 1394 standard provides that the AV/C command and a response thereto must be transferred with the format shown in Fig. 7 in accordance with a function control protocol (FCP). In Fig. 7, in "destination_ID", a node ID assigned to a receiver of the packet is described. In "source_ID", a node ID assigned to a transmitter of the packet is described. By way of example, when the television receiver 1 queries the video cassette recorder 2 about its AV link address, the node ID "NID2" of the video cassette recorder 2 is described in the destination_ID, and the node ID "NID1" of the television receiver 1 is described in the source_ID.

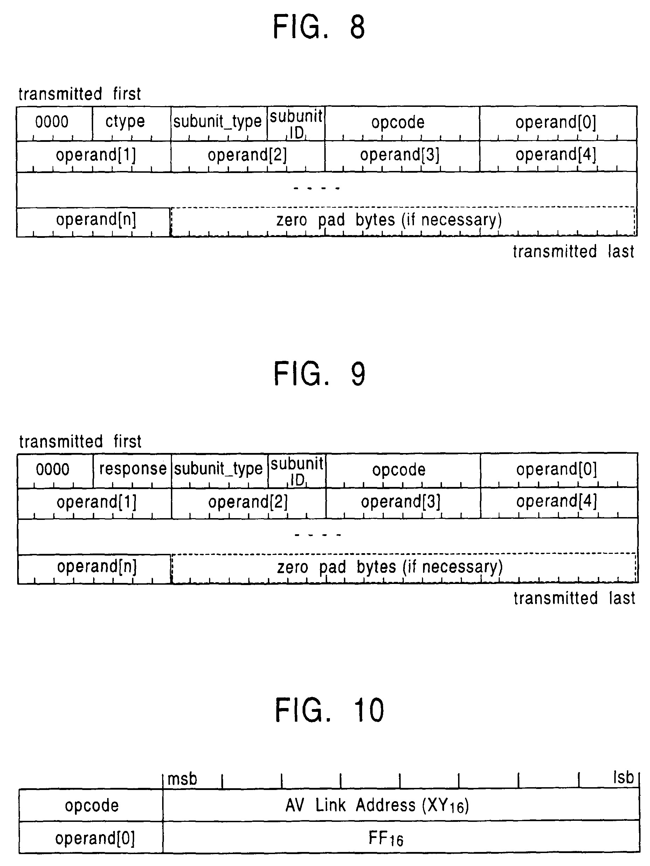

In the FCP frame shown in Fig. 7, when the packet transfers a command, an AV/C command frame having the format shown in Fig. 8 is set. When the packet transfers a response, an AV/C response frame having the format shown in Fig. 9 is set in the FCP frame.

In this process, an AV/C command is transmitted. Accordingly, the AV/C command frame shown in Fig. 8 is used.

Specifically, the television receiver 1 inquires about the AV link address of the video cassette recorder 2. Thus, in "opcode" and "operand[0]" of the AV/C command frame shown in Fig. 8, the command shown in Fig. 10 is set. In other words, in the opcode, the status command defined in the IEEE 1394 standard is described. Specifically, the value "XY" described in the opcode represents a command inquiring about the AV link address. Since the operand[0] is not particularly required in this case, the value "FF" is set there.

The controller 36 controls the interface 31 to generate and output a command requesting the AV link address to the IEEE 1394 bus 21.

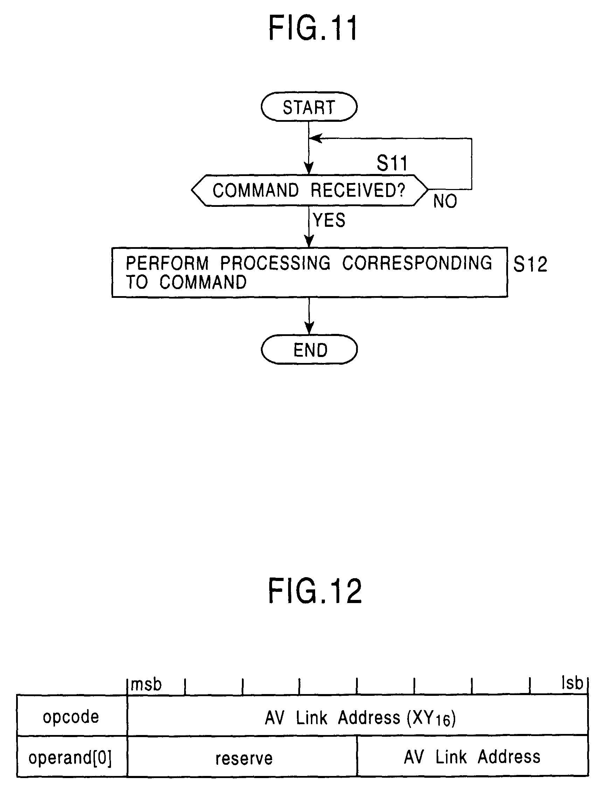

Each electronic apparatus connected to the IEEE 1394 bus 21 performs the process shown in Fig. 11. In other words, the controller 46-1 in the video cassette recorder 2 is on standby until receiving, from the IEEE 1394 bus 21 via the interface 41-1, a command including a packet in which a node ID directed to the controller 46-1 is described as "destination ID". When receiving the command, the controller 46-1 executes processing corresponding to the command in step S12.

In other words, the controller 46-1 captures a packet in which "NID2" is described in the destination_ID shown in Fig. 7, by regarding this packet as directed to the controller 46-1. In the FCP frame of the packet, the command "XY" that requests the return of an AV link address (as shown in Fig. 10) is described in the opcode. Thus, the controller 46-1 describes its own address "1" (on the AV links 11) in an AV/C response frame having the format shown in Fig. 9, and outputs the packet to the IEEE 1394 bus 21. Specifically, the controller 36 describes the same command "XY" as the command described in the opcode shown in Fig. 10, as shown in Fig. 12. The controller 36 describes, in the four LSB-side bits of the operand[0], the address "1" stored in its built-in memory as its own address on the AV links 11.

At this time, the node ID "NID1" of the television receiver 1 is described in "destination_ID" (as shown in Fig. 7) of a packet output to the IEEE 1394 bus 21 by the video cassette recorder 2. The node ID "NID2" of the video cassette recorder 2 is described in "source_ID".

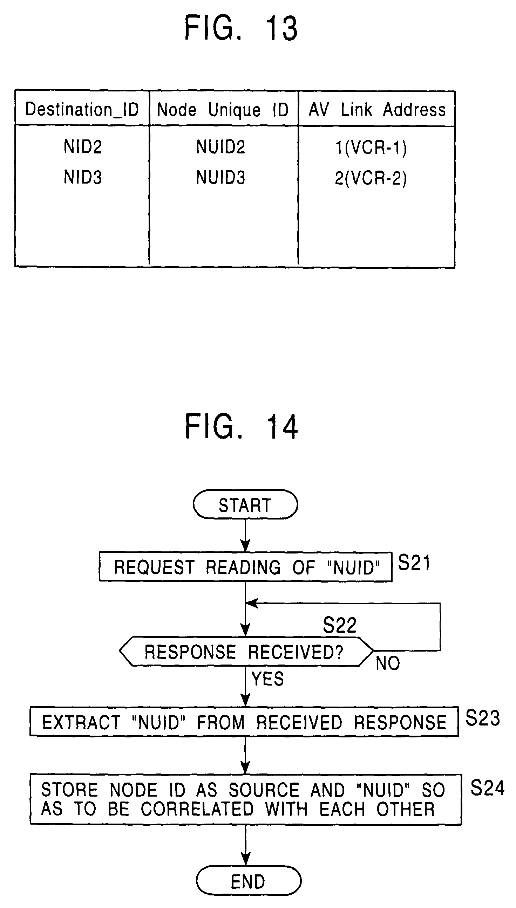

In step S2 shown in Fig. 6, the controller 36 in the television receiver 1 is on standby until receiving a response packet directed to the controller 36. On receiving a packet in which the destination_ID is the node ID "NID1", the controller 36 captures it. In step S3 shown in Fig. 6, the controller 36 extracts the AV link address described in the lower four bits of the operand[0] in the FCP frame of the captured packet. In step S4, the controller 36 reads the node ID "NID2" described in the source_ID of the captured packet, and stores it in a built-in memory so as to be correlated with the AV link address extracted in step S3. Thereby, the controller 36 stores (AV link) address "1" (the address of "VCR-1") in its built-in memory so as to be correlated with node ID "NID2" of the video cassette recorder 2, as shown in Fig. 13.

The television receiver 1 performs similar processing for the video cassette recorder 3, whereby (AV link) address 2 (the address of "VCR-2") is stored in a built-in table so as to correspond to the node ID "NID3" of the video cassette recorder 3, as shown in Fig. 13.

With reference to the flowchart shown in Fig. 14, a process in which each electronic apparatus connected to the IEEE 1394 bus 21 reads and correlates node unique IDs (on the IEEE 1394 bus 21) with node IDs is described below.

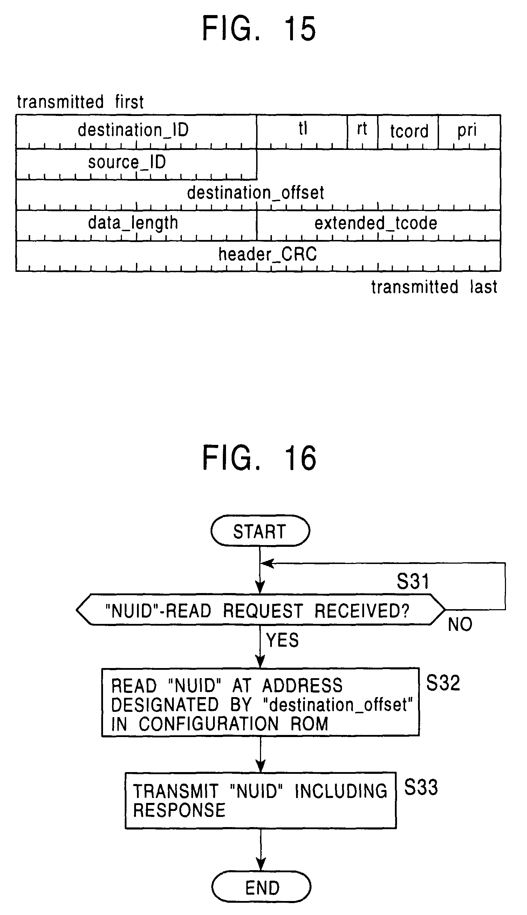

The controller 36 in the television receiver 1 controls the interface 31, thereby requesting the video cassette recorder 2 in step S21 to read a node unique ID ("NUID") via the IEEE 1394 bus 21. In other words, at this time, the controller 36 outputs a read-request-for-data-block packet having the format shown in Fig. 15. In the packet, the node ID "NID2" of the video cassette recorder 2 is described in the destination_ID, and the node ID "NID1" of the television receiver 1 is described in the source_ID. In "destination_offset", a memory address at which the node unique ID of the video cassette recorder 2 is stored is described. The node unique ID is stored in a configuration ROM built into the controller 46-1. Accordingly, an address in the configuration ROM is described.

When the read-request-for-data-block packet is transferred via the IEEE 1394 bus 21, the controller 46-1 in the video cassette recorder 2 executes a process shown as the flowchart in Fig. 16. In step S31, the controller 46-1 is on standby until receiving a packet that requests the reading of a node unique ID. When receiving the packet, the controller 46-1 executes, in step S32, processing for reading, from the built-in configuration ROM, "NUID" stored in the address designated by the destination_offset in the packet.

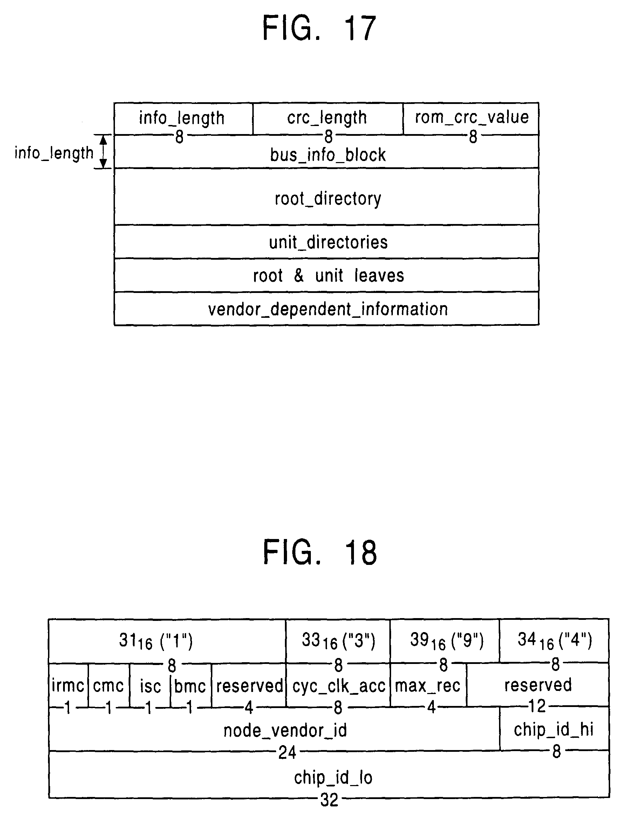

In the configuration ROM, data are stored based on the general ROM format shown in Fig. 17. Among the data, "bus_info_block" and "root_directory" are fixed in position. the bus_info_block has the format shown in Fig. 18. In this format, a 24-bit (3-byte) "node_vendor_id" and a 40-bit (5-byte) "chip_id" constitute a node unique ID. The chip_id consists of an 8-bit (1-byte) "chip_id_hi" and a 32-bit (4-byte) "chip_id_lo".

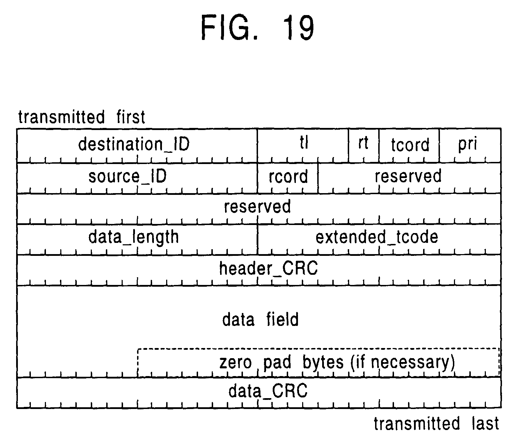

In step S33, the controller 46-1 describes the node unique ID read in step S32 in "data field" of the read-response-for-data block shown in Fig. 19, and outputs it to the IEEE 1394 bus 21. At this time, the node ID "NID1" of the television receiver 1 is described in the destination_ID, and the node ID "NID2" of the video cassette recorder 1 is described in the source_ID.

Referring back to the flowchart in Fig. 14, when the controller 36 in the television receiver 1 requests the video cassette recorder 2 to read a node unique ID, as described above, the video cassette recorder 2 transmits a response. Thus, in step S22, the controller 36 in the television receiver 1 is on standby until receiving the response to the reading request from the video cassette recorder 2. When receiving the response, the controller 36 extracts a node unique ID from among packets of the received response in step S23. That is, the 8-byte node unique ID described in the data field shown in the format in Fig. 19 is extracted. In step S24, the controller 36 extracts the packet source ID of a packet having the format shown in Fig. 19, and stores it in the table shown in Fig. 13 so as to be correlated with the node unique ID extracted in step S23.

As described above, the television receiver 1 acquires a correspondence table (as shown in Fig. 13) in which the addresses (on buses) of the video cassette recorders 2 and 3 connected to both the AV links 11 and the IEEE 1394 bus 21 are described.

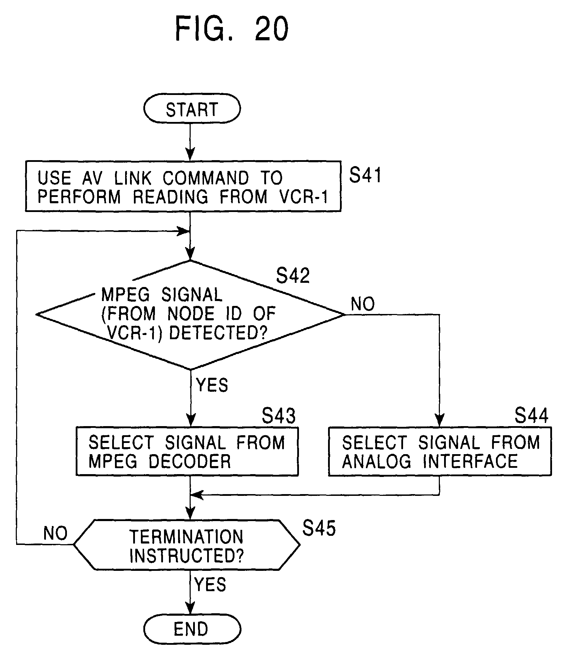

When the correspondence between the AV link addresses and the addresses on the IEEE 1394 bus 21 is obtained, as described above, the television receiver 1 executes the process shown in Fig. 20 when, for example, requesting the video cassette recorder 2 to read AV signals recorded in the videocassette 51-1. In step S41, the controller 36 in the television receiver 1 controls the interface 35, thereby using an AV link command to instruct the video cassette recorder 2 to play the loaded videocassette 51-1.

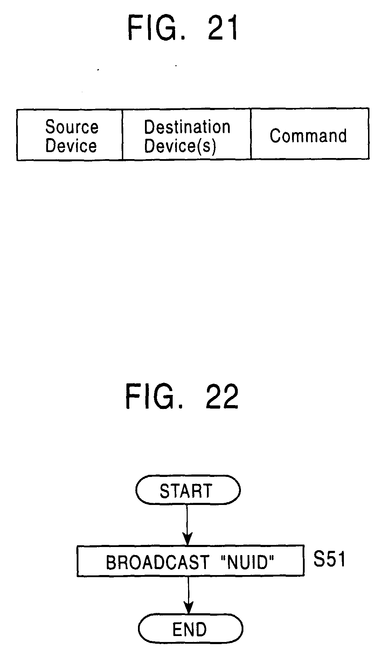

A transmission format used on the AV links 11 is described as shown in Fig. 21. At the head of the format, the AV link address of a source device, from which the packet is output, is described. Following it, the AV link address of a destination device to which the packet is transmitted is described. In this embodiment, the AV link address "0" of the television receiver 1 is described as the source device, and the AV link address "1" of the video cassette recorder 2 is described as the destination device.

A command follows the destination device. In this embodiment, a command representing the start of the reading of a record is described.

When receiving a read command from the AV link 11 via the interface 44-1, the controller 46-1 in the video cassette recorder 2 controls the RF amplifier 43-1 to read the AV signals recorded in the videocassette 51-1.

The controller 46-1 monitors the output (or input) of the RF amplifier 43-1. When detecting digital AV signals as the AV signals being read, the controller 46-1 controls the RF amplifier 43-1 to output the digital AV signals to the D-VHS processor 42-1. When detecting analog signals as the AV signals being read, the controller 46-1 controls the RF amplifier 43-1 to output the analog signals to the VHS processor 45-1.

The D-VHS processor 42-1 transforms the input digital AV signals, which has a D-VHS format, into digital AV signals having an MPEG format, and outputs the signals to the IEEE 1394 bus 21 via the interface 41-1. At this time, the node ID "NID1" of the television receiver 1 is described in the destination_ID of the output packet, and the node ID "NID2" of the video cassette recorder 2 is described in the source_ID of the output packet.

Similarly, the VHS processor 45-1 processes the input analog video signals and outputs the processed signals to the AV links 11 via the interface 44-1.

In Fig. 20, in step S42, the controller 36 in the television receiver 1 monitors an output from the interface 31, and determines whether a packet in which its own node ID "NID1" is described as the destination_ID is output. If the packet is detected, the controller 36 determines whether MPEG signals are detected in which the source_ID is the node ID "NID2" of the video cassette recorder 2. If a packet satisfying the above-described conditions exists, the controller 36 controls the switch circuit 33 in step S43 to select the output of the MPEG decoder 32. As a result, the digital AV data, captured via the interface 32, are decoded by the MPEG decoder 32, and the decoded data are output and displayed on the display 34.

The process proceeds to step S45. The controller 36 determines whether termination of the process has been instructed. If it has not been instructed, the process returns to step S42 and the subsequent steps are repeatedly executed.

If the process has determined in step S42 that no digital AV signals have been transferred from the video cassette recorder 2 via the IEEE 1394 bus 21, the process proceeds to step S44, and the controller 36 controls the switch circuit 33 to select the output of the interface 35. With the above-described process, after the analog AV signals, input via the AV link 11, are processed by the interface 35, the processed signals are output via the switch circuit 33 and displayed on the display 34. After that, the process proceeds to step S45, and the subsequent steps are repeatedly executed.

As described above, regardless of whether digital AV signals or analog AV signals are read from the videocassette 51-1, the television receiver 1 can output and display the read signals on the display 34.

Although the IEEE 1394 bus 21 is used to recognize each AV link address in the above-described embodiment, the AV links 11 may conversely be used to recognize the node ID of each electronic apparatus.

In this case, as shown in the flowchart in Fig. 22, each electronic apparatus, connected to the AV links 11, simultaneously broadcasts (or multicasts) its own node ID to the other electronic apparatuses via the AV links 11.

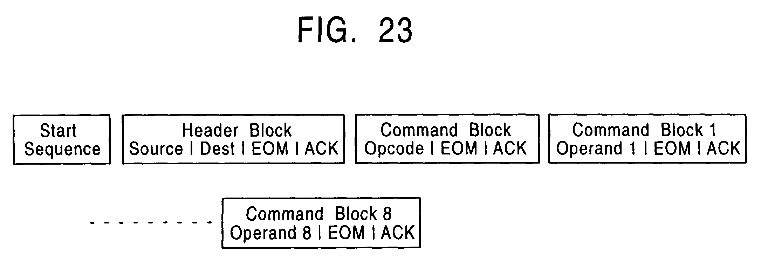

Fig. 23 shows the structure of a packet used in the broadcasting or multicasting. From the head of the packet, "Start Sequence", "Header Block", "Command Block" including "opcode", and "Command Block 1" to "Command Block 8" are arranged in this order.

In "Source Device" (indicated by "Source") in the Header Block, the AV link address (e.g., the AV link address "1" of the video cassette recorder 2) of an electronic apparatus having transmitted this packet is described. In "Destination Device" (indicated by "Dest."), the value "15" that represents broadcast (general call) is described (See Fig. 2). When the value "15" is described in the Destination Device, an electronic apparatus regards a packet having the value as being directed to the electronic apparatus, and captures the packet.

The value "15" represents general call. In the opcode in the Command Block, a command that represents a declaration of a node unique ID is described. In each of "Command Block 1" to "Command Block 8", an 8-byte part, separated from a 64-byte node unique ID, is set. "End of Message" (indicated by "EOM") is used as a flag indicating whether the block is an end block, and "Acknowledge" (indicated by "ACK") is used as a flag representing whether the block is an acknowledgement flag.

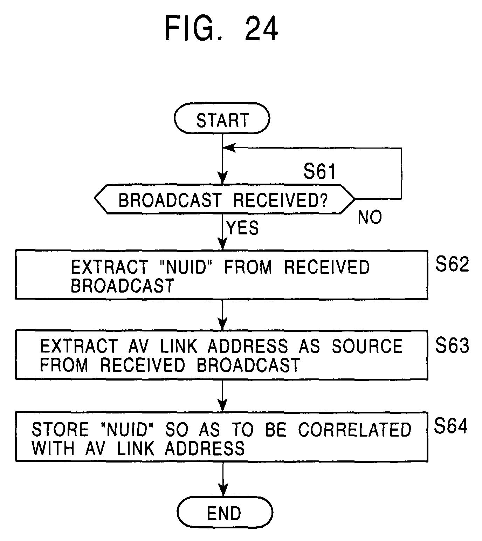

When a predetermined electronic apparatus broadcasts its own node unique ID (i.e., performs general call), as described above, each electronic apparatus executes the process shown in Fig. 24. By way of example, in step S61, the controller 36 in the television receiver 1 is on standby until receiving a broadcast (general call). When the controller 36 receives a broadcast packet, it extracts a node unique ID from the received packet in step S62. In other words, the controller 36 extracts, from the broadcast packet, eight 8-byte separated parts (constituting the 64-byte node unique ID) in the eight "Operand" parts of the eight command blocks.

In step S63, the controller 36 further extracts the AV link address of a source device from the received packet. In other words, the controller 36 further extracts the AV link address of the source device from the received packet. In other words, the AV link address (e.g., the AV link address "1" of the video cassette recorder 2) of an electronic apparatus that transmitted the packet as a broadcast is extracted. In step S64, the controller 36 stores the node unique ID extracted in step S62 and the AV link address extracted in step S63 so that they are correlated to each other in a table, as shown in Fig. 13.

With the above-described process, the correspondence between each node unique ID and each AV link address is established.

The correspondence between each node ID and each node unique ID can be established similarly to the above-described process.

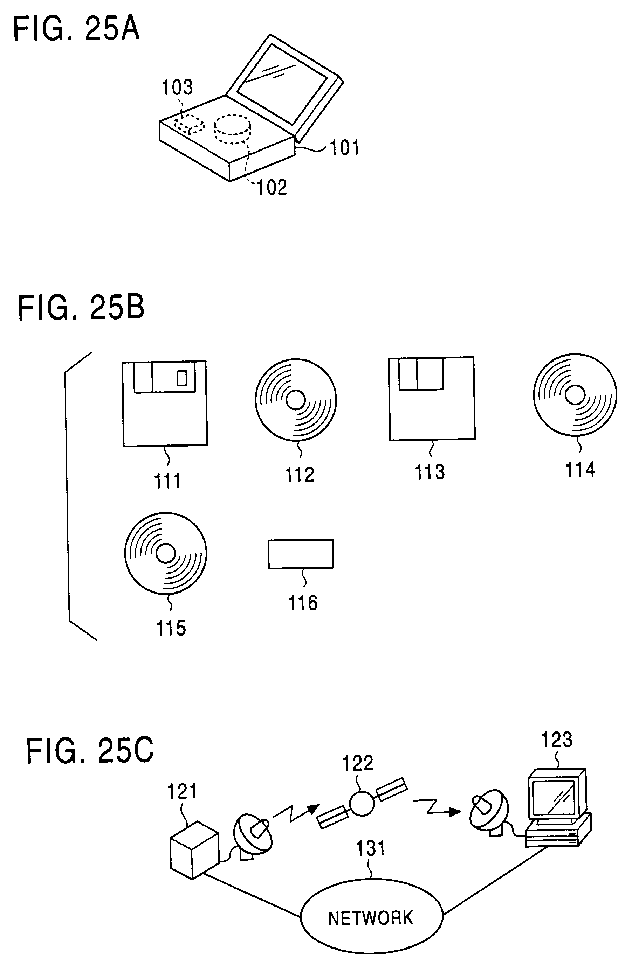

A medium, used when a program for executing the foregoing processes is installed in a computer and is set to be executable by the computer, is described below with reference to Figs. 25A, 25B, and 25C.

As shown in Fig. 25A, the program can be provided to the user with a hard disk 102 or a semiconductor memory 103 as a recording medium built into a personal computer 101, on which the program is preinstalled.

As shown in Fig. 25B, the program can also be provided as package software obtained by temporarily or permanently storing the program on a recording medium such as a floppy disk 111, a CD-ROM 112, a magneto-optical disk 113, a digital versatile disk 114, a magnetic disk 115, or a semiconductor memory 116.

As shown in Fig. 25C, by transferring the program by radio wave from a download site 121 to a personal computer 123 via an artificial satellite for digital satellite broadcasting, or transferring the program by wire from the download site 121 to the personal computer 123 via a network 131 such as a local area network or the Internet, the transferred program can be stored in a built-in hard disk drive in the personal computer 123.

The "medium" in this specification means a broad concept including all the above-described types of medium.

In this specification, a step that describes the program provided from the medium includes not only processes which are time-sequentially executed along a predetermined order, but also processes which are not always time-sequentially executed and which are executed in parallel or separately.

In this specification, the "system" means the entirety of a plurality of electronic apparatuses.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing apparatus connectable to another information processing apparatus by at least two buses (11, 21),comprising:
holding means for holding the address of a first bus of the buses (11, 21), and the address of a second bus of the buses (11, 21);
inquiry means for using said first bus to query the other information processing apparatus about the address of said second bus; and
response means for, when the other information processing apparatus uses said first bus to query said response means about the address of said second bus, responding to the other information processing apparatus by sending the stored address of said second bus.

2. An information processing apparatus as claimed in Claim 1, characterized in that:
said first bus is an IEEE 1394 high-speed serial bus (21); and
said second bus is an AV link (11).

3. An information processing method for an information processing apparatus connectable to another information processing apparatus by at least two buses, comprising the steps of:
holding the address of a first bus of the buses and the address of a second bus of the buses;
querying the other information processing apparatus about the address of said second bus by using said first bus; and
responding, when the other information processing apparatus uses said first bus to inquire about the address of said second bus, to the other information processing apparatus by sending the stored address of said second bus.

4. A medium for controlling an information processing apparatus to execute a program, said information processing apparatus being connectable to another information processing apparatus by at least two buses (11, 21), said program being arranged to cause the information processing apparatus to execute the steps of:
holding the address of a first bus of the buses (11, 21) and the address of a second bus of the buses (11, 21);
querying the other information processing apparatus about the address of said second bus by using said first bus; and
responding, when the other information processing apparatus uses said first bus to inquire about the address of said second bus, to the other information processing apparatus by sending the stored address of said second bus.

5. An information processing apparatus connectable to another information processing apparatus by at least two buses (11, 21),comprising:
declaration means for using a first bus of the buses (11, 21) to declare, on the other information processing apparatus, the address of a second bus of the buses (11, 21); and
holding means which, when receiving the declaration of the address of said second bus from the other information processing apparatus via said first bus, extracts the address of said first bus held in the other information processing apparatus from the declaration, and which holds the extracted address of said first bus so as to correspond to the address of said second bus held in the other information processing apparatus.

6. An information processing apparatus as claimed in Claim 5, characterized in that:
said first bus is an AV link (11); and
said second bus is an IEEE 1394 high-speed serial bus (21).

7. An information processing method for an information processing apparatus connectable to another information processing apparatus by at least two buses,comprising the steps of:
a declaration step for using a first bus of the buses to declare, on the other information processing apparatus, the address of a second bus of the buses; and
a holding step which, when receiving the declaration of the address of said second bus from the other information processing apparatus via said first bus, extracts the address of said first bus held in the other information processing apparatus from the declaration, and which holds the extracted address of said first bus so as to correspond to the address of said second bus held in the other information processing apparatus.

8. A medium for controlling an information processing apparatus to execute a program, said information processing apparatus being connectable to another information processing apparatus by at least two buses (11, 21), said program being arranged to cause the information processing apparatus to execute:
a declaration step for using a first bus of the buses (11, 21) to declare, on the other information processing apparatus, the address of a second bus of the buses (11, 21); and
a holding step which, when receiving the declaration of the address of said second bus from the other information processing apparatus via said first bus, extracts the address of said first bus held in the other information processing apparatus from the declaration, and which holds the extracted address of said first bus so as to correspond to the address of said second bus held in the other information processing apparatus.
